(19) Europäisches Patentamt
European Patent Office
Office européen des brevets

(11) Veröffentlichungsnummer: **0 431 387 B1**

(12) **EUROPÄISCHE PATENTSCHRIFT**

(45) Veröffentlichungstag der Patentschrift: **06.09.95**

(51) Int. Cl.$^6$: **C08B 11/193**, C08B 11/15, C02F 1/52

(21) Anmeldenummer: **90122136.6**

(22) Anmeldetag: **20.11.90**

Die Akte enthält technische Angaben, die nach dem Eingang der Anmeldung eingereicht wurden und die nicht in dieser Patentschrift enthalten sind.

# (54) Basische Polysaccharide.

(30) Priorität: **02.12.89 DE 3939951**

(43) Veröffentlichungstag der Anmeldung:
**12.06.91 Patentblatt 91/24**

(45) Bekanntmachung des Hinweises auf die Patenterteilung:
**06.09.95 Patentblatt 95/36**

(84) Benannte Vertragsstaaten:
**BE DE FR GB IT NL SE**

(56) Entgegenhaltungen:
**DE-A- 3 302 456**
**FR-A- 1 150 351**
**FR-A- 1 493 421**
**GB-A- 2 219 587**

(73) Patentinhaber: **Wolff Walsrode Aktiengesellschaft**
**Postfach 15 15**
**D-29655 Walsrode (DE)**

(72) Erfinder: **Szablikowski, Klaus, Dr.**
**Claudiusstrasse 5**
**W-3030 Walsrode (DE)**
Erfinder: **Breckwoldt, Jörn, Dr.**
**Rostocker Strasse 55**
**W-2720 Rothenburg (DE)**
Erfinder: **Wilke, Michaela, Dr.**
**Ahornweg 9**
**W-3043 Schneverdingen (DE)**
Erfinder: **Buysch, Hans-Josef, Dr.**
**Brandenburger Strasse 28**
**W-4150 Krefeld (DE)**

(74) Vertreter: **Braun, Rolf, Dr. et al**
**Bayer AG**
**Konzernverwaltung RP**
**Patentabteilung**
**D-51368 Leverkusen (DE)**

**EP 0 431 387 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Polysaccharide, ein Verfahren zu ihrer Herstellung und ihre Verwendung.

Basische und kationische Polysaccharide sind begehrt als Hilfsmittel für die Papierfabrikation, Ausgangsprodukte für die Herstellung hochaktiver Filtermaterialien, die im medizinischen Bereich und in der Nahrungsmittelindustrie Verwendung finden und auch als Zusätze zu hygienischen und kosmetischen Reinigungs- und Pflegemitteln. Ihre Wirksamkeit ist in der Regel umso größer, je mehr basische und/oder kationische Gruppen sie enthalten.

Basische Polysaccharide dienen u.a. als Ionenaustauscher (USA-A 4 199 485) zur Herstellung säurelöslicher Polysaccharide (US-A 2 623 041) und als Ausgangsprodukte für die Synthese kationischer Polysaccharide (vgl. US-A 2 768 162).

Es ist also wünschenswert, Polysaccharide in einem mehr oder weniger hohen Grad entsprechend den jeweiligen Anforderungen substituieren zu können. Man hat schon früh Cellulosesulfonate mit Aminen umgesetzt, um dadurch zu N-haltigen Cellulosen zu gelangen. Die erhaltenen Substitutionsgrade waren jedoch unzureichend (z.B. 0,8 Gew.-% N; vgl. Angew. Chem. 39, 1509-36 (1926)) und die Ausbeuten gering (vgl. J. Amer. Chem. Soc. 63, 1688-1691).

Eine Kationisierung von Baumwolle zur Verbesserung der Anfärbbarkeit mit basischen Farbstoffen wird in GB-PS 1 082 880 und US-A 4 178 438 beschrieben. Man verwendet dazu N-Methylol-chloracetamid (GB-PS) bzw. N-Methylol-$\beta$-amino-propionamide (US-PS), die mit der Faser zur Reaktion gebracht und dann mit tertiären Aminen (GB-PS) bzw. Alkylierungsmitteln (US-PS) kationisiert werden. Die Substitutionsgrade sind gering. Der maximale Gehalt an basischem, also quaternisierbarem N beträgt in beiden Fällen etwa 1,3 Gew.-%.

Nach US-A 3 472 840 erhält man kationische Celluloseether durch Alkylierung von Cellulose-hydroxyethylether mit 3-Chlor-2-hydroxypropyl-trimethyl-ammoniumchlorid oder mit dem daraus in Gegenwart von Alkalihydroxid entstehenden 2,3-Epoxypropyl-trimethyl-ammoniumchlorid. Obwohl das Alkylierungsmittel häufig in großem Überschuß verwendet wird, übersteigt der Substitutionsgrad nicht den Wert von 0,4. Ähnliches gilt für das Verfahren der EP-A-233 336, das das gleiche Alkylierungsmittel vorschlägt für die Kationisierung von Stärke unter besonderen vorteilhafteren Verfahrensbedingungen. Der DS bleibt unter 0,2.

Eine weitere Variante zu dem Verfahren der US-A 3 472 840 schlägt die EP-A-189 935 vor, nach der hydrophobe kationische Cellulosether entstehen. Dabei werden ebenfalls Epoxiquartärsalze als Alkylierungsmittel eingesetzt. Die Ergebnisse ähneln denen der US-A 3 472 840. Höhere Substitutionsgrade haben die aus der US-A 2 768 162 bekannten Celluloseether. In den Beispielen wird ein DS von 0,7 angegeben, weil von einem Vorprodukt ausgegangen wird, das diesen DS schon aufweist. Das Verfahren erscheint einfach und praktikabel. Die Ausgangsprodukte sind jedoch nur schwer zugänglich. Man kann sie gewinnen nach den Verfahren der US-A 26 23 041 und US-A 26 23 042 durch Alkylierung von Cellulose und Celluloseethern mit Dialkylaminoethylchlorid-hydrochlorid. Entsprechend der US-A 26 23 041 wird in Lösung gearbeitet, wobei nur geringe Gewichtsanteile Cellulose, bezogen auf die Gesamtmenge, in einer hochkonzentrierten wäßrigen Lösung von Trimethylbenzylammoniumhydroxid gelöst werden können. Diese quartäre Ammoniumbase ist nicht nur sehr teuer, sondern kann auch nur schwer zurückgewonnen und aus dem gebildeten Salz regeneriert werden. In der US-A 26 23 042 wird die Alkylierung angeblich in Suspension durchgeführt. Dies ist nicht verständlich, da wiederum nur geringe Mengen Cellulose pro Ansatz und wie in der US-A 26 23 041 große Mengen der quartären Ammoniumbase eingesetzt werden. Die Anwendung ähnlicher Bedingungen legt nahe, daß auch hier zumindestens partielle Lösung der Cellulose erfolgt, erkennbar auch an den geringen Mengen Cellulose, die umgesetzt werden können. Das verwendete Reagenz Dialkylaminoethylchlorid-hydrochlorid verhält sich unter den Alkylierungsbedingungen ambivalent. Es kann nicht nur mit der Cellulose, sondern auch mit sich selber reagieren.

Man erhält in jedem Fall dimere bis oligomere quartäre Ammoniumverbindungen, die sich punktuell mit der Cellulose verbinden und einen durchgehend hohen Substitutionsgrad vortäuschen können oder sie sind nur mit der Cellulose aggregiert und durch Reinigungsoperationen schwer entfernbar.

Die geäußerten Bedenken werden gestützt durch die DE-A-25 09 937 in der ein Verfahren zur Kationisierung von Ethylcellulose durch Alkylierung mit Diethylaminoethylchlorid beschrieben wird. Man alkyliert dabei in heterogener Phase einerseits Cellulose in Gegenwart von NaOH als Base und erreicht trotz überschüssigem Alkylierungsmittels nur niedrige Substitutionsgrade von 0,1-0,22 an tertiärem Aminorest. Anschließend wird dieses Vorprodukt mit Ethylchlorid zu aminosubstituierter Ethylcellulose umgesetzt. Andererseits arbeitet man in Lösung mit vorgefertigter Ethylcellulose und alkyliert diese mit Diethylaminoethylchlorid. Auch unter diesen günstigeren Bedingungen sind die Substitutionsgrade unter vergleichbaren Bedingungen etwa gleich groß. Selbst wenn man wie in den Beispielen 4 bis 6 unter massivem Einsatz von

Alkylierungsmittel den Substitutionsgrad zu erhöhen versucht, gelingt dies nur sehr eingeschränkt von 0,30 auf 0,38. Gleichzeitig sinkt die Ausbeute bezogen auf eingesetztes Alkylierungsmittel unverhältnismäßig stark von 38 % auf 20 %. Offensichtlich nähert man sich dabei einem Grenzwert, der auch bei weit höherem Einsatz an Alkylierungsmittel nicht zu überschreiten ist.

Im übrigen arbeiten auch alle anderen bisher besprochenen Verfahren mit Kationisierungsmitteln, die mit sich selber reagieren können, wodurch die Substitution am Polysaccharid vermindert und Nebenprodukte und Polymere gebildet werden, die dem basischen oder kationischen Polysaccharid beigemengt und möglicherweise nicht mehr entfernt werden können. Aus den Formelbildern der US-A 34 72 840 ersieht man, daß auf die Cellulose Polyethergruppen mit quartären Gruppen aufgepfropft werden, so wie diese Pfropfung an einer Cell-$O^{\ominus}$-Gruppe beginnen kann, kann sie mit gleicher Wahrscheinlichkeit, gegebenenfalls sorgar höherer Wahrscheinlichkeit von einem $OH^{\ominus}$-Ion ausgehen, da sowohl Ion wie Alkylierungsmittel in Lösung vorliegen, die Cellulose aber in heterogener Phase.

Außerdem ist eine rasche Verseifung zum Quartärdiol möglich (vgl. Das Papier 35 (12), 555 (1981)).

Darum ist nach der Alkylierung immer ein aufwendiger Reinigungs- und Umfällprozeß erforderlich, um die kationisierte Cellulose von den kationischen Polyethern zu trennen (siehe Beispiele 1 bis 3 der US-A 34 72 840).

Zu diesen Schwierigkeiten kommen der hohe Preis und die bekannt hohe Toxizität der o.a. Epoxyquartärsalze. Was am Beispiel der Kationisierung mit Dialkylaminoethylchlorid und Epoxyquartärsalzen erläutert wurde, nämlich die Homopolymerisation und Selbstkondensation gilt auch für alle anderen genannten Alkylierungsmittel. Die N-Methylolamide der GB 10 82 880 und der US-A 41 78 438 reagieren bekanntlich leicht miteinander und bilden unbrauchbare Nebenprodukte und Polymere.

Entsprechend der vorliegenden Literatur hat man erkannt, daß über Dialkylaminoalkylderivate eine Kationisierung von Polysacchariden im technischen Bereich nicht praktikabel ist und daher fast ausschließlich Alkylierungen mit dem in der US-A 34 72 840 und der EP-A 233 336 genannten 3-Chlor-2-hydroxypropyltrimethylammoniumchlorid oder dem daraus entstehenden 2,3-Epoxypropyl-trimethylammoniumchlorid durchgeführt (vgl. Das Papier 34 (1980) S. 575-579 (1980); 35 (10 A), S. V 33-V 38 (1981); 35 - (12), S. 555-562 (1981)).

Welche der drei letztgenannten Verbindungsklassen man einsetzen mag, man muß wegen der hohen Toxizität strenge Sicherheitsmaßnahmen einhalten, auf diesem Wege gewonnene kationische Polysaccharide sorgfältig von Nebenprodukten reinigen und alle wäßrigen Ablaugen wegen ihres Gehaltes an toxischen quartären Nebenprodukten aufarbeiten und entsorgen, was nur mit hohem Aufwand durchführbar ist.

Da den Quaternierungsreaktionen zugesetztes überschüssiges Alkylierungsreagenz in Nebenreaktionen verbraucht wird und nicht zurückgewonnen werden kann, sind auch unter ökonomischen Aspekten höhere Substitutionsgrade kaum realisierbar.

Nach FR-A-1 150 351 werden basische Cellulosederivate durch Umsetzung von Carbonsäureestergruppen mit Ammoniak oder Aminen erhalten. Eine weiterführende chemische Reaktion zu kationischen Derivaten ist jedoch nicht möglich.

Kationische Stärkederivate werden nach FR-A-1 493 421 durch Umsetzung mit chlorethylmorpholin-Hydrochlorid erhalten. Nachteilig an dem Verfahren ist, daß die Reaktionsprodukte nur sehr schwer von dem Veretherungsreagenz und von den Reaktionsnebenprodukten gereinigt werden können. Unter ökonomischen Aspekten ist auch eine technische Umsetzung des Verfahrens aufgrund eines relativ hohen Preises des Alkylierungsmittels kaum realisierbar.

Der Erfindung lag die Aufgabe zugrunde, basische und kationische Polysaccharide mit einer eindeutigen, flexibel einstellbaren Substitution und möglichst hohem Substitutionsgrad herzustellen nach eindeutig verlaufenden Reaktionen mit möglichst preiswerten Reagentien.

Die vorliegende Erfindung betrifft Polysaccharide enthaltend wiederkehrende Einheiten I oder ein Salz II davon

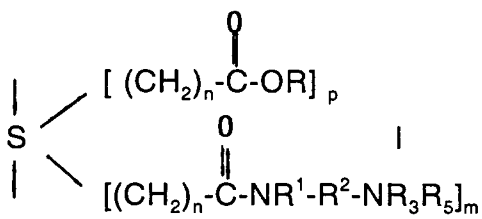
I

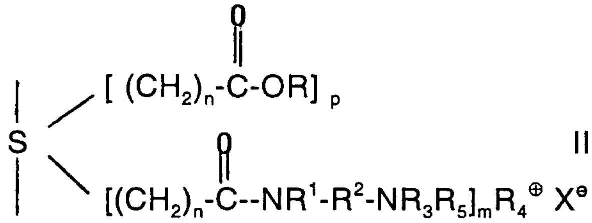
II

worin bedeuten

| | |
|---|---|
| S | eine Glucose-, Pentose- oder Galaktoseeinheit, oder eine derivatisierte Glucose einheit der Cellulose, |
| p | eine Zahl von 0 bis 2,9 |
| m | eine Zahl von 0,05 bis 2,9 |
| m + p | eine Zahl von 0,05 bis 3,0 |
| R | $C_{1-12}$-Alkyl, $C_{5-6}$-Cycloalkyl, $C_{6-12}$-Aryl, $C_{7-12}$-Aralkyl, $\beta$-Hydroxyalkyl und/oder l/Z Me, worin Me ein Kation und Z die Wertigkeit des Kations ist, |
| $R^1$ | H, $C_{1-4}$-Alkyl, |
| $R^2$ | einen Alkylenrest, der durch wenigstens ein O- oder N-Atom oder eine olefinische Doppelbindung unterbrochen sein kann, |
| $R^3$ | H, einen gegebenenfalls durch eine OH- oder olefinische Gruppe substituierter Alkylrest, der durch wenigstens ein Heteroatom unterbrochen sein kann, einen Aralkylrest oder den Rest eines Polysaccharids der Formel Ia worin die Indices und Substituenten die oben angegebene Bedeutung haben, |

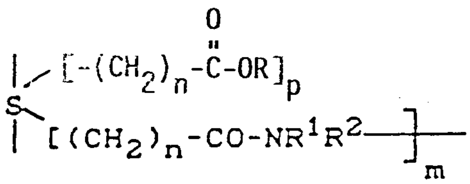

(Ia)

| | |
|---|---|
| $R^4$ | gleich oder verschieden von $R^3$ und ist mit dem selben N-Atom verbunden wie $R^3$ und kann nicht gleichzeitig mit $R^3$ die Bedeutung $C_2$-$C_8$-Alkylen oder Ia haben |
| $R^5$ | H, einen Alkyl-, Aralkyl- oder Arylrest |

und/oder

| | |
|---|---|
| $R^3$ und $R^5$ | zusammen mit dem geneinsamen N-Atom einen gegebenenfalls ein weiteres Heteroatom enthaltenden Ring |

und/oder

| | |
|---|---|
| $R^1$ und $R^5$ | zusammen mit $R^2$ einen Ring |
| n | eine ganze Zahl von 1 bis 6, |
| $X^\ominus$ | ein Anion. |

In einer bevorzugten Ausführungsform, insbesondere wenn die beiden N-Atome, die durch $R^2$ verbunden sind, nicht zusammen in einem Ring stehen, bedeutet $R^2$ vorzugsweise auch einen Rest der allgemeinen Struktur III

$-[R^6-Y-]_qR^7-$ III

worin

| | |
|---|---|
| $R^6$ und $R^7$ | gleich oder verschieden sind und einen gegebenenfalls durch ein O-Atom unterbrochenen Alkylenrest mit 2 bis 6 C-Atomen, |
| Y | O oder die Gruppe |

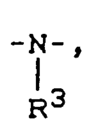 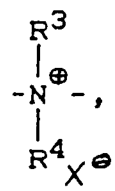 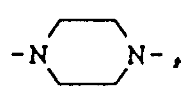

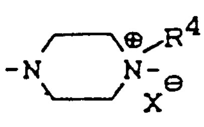 oder 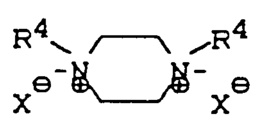

wobei $R^3$ die oben angegebene Bedeutung hat, $X^{\ominus}$ ein Anion ist und $R^4$ die Bedeutung von $R^3$ hat mit der Einschränkung, daß nur $R^3$ Ia sein kann,

q — eine ganze Zahl von 1 bis 5 bedeuten.

Vorzugsweise haben die Substituenten folgende Bedeutung:

R — H, Na, K, $CH_3$, $C_2H_5$, $CH_2$-$CH_2OH$, $CH_2$-CH(OH)-$CH_3$,

$R^1$ — H, $CH_3$

$R^3$ und $R^4$ — H, $CH_3$, $C_2H_5$, $C_3H_7$, $C_4H_9$, Cycloalkyl, $CH_2$-$CH_2$-OH, $CH_2$-$CH_2$-$OCH_3$,

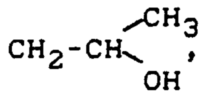 , 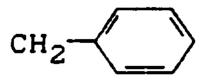 ,

$CH_2$-CH = $CH_2$,

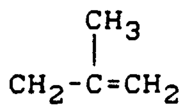 .

$R^3$ und $R^4$ — kann auch -$CH_2$-$CH_2$-, -$CH_2$-$CH_2$-$CH_2$-, -$(CH_2)_6$-, -$CH_2$-$CH_2$-O-$CH_2$-$CH_2$-, -$CH_2$-CH = CH-$CH_2$- oder -$CH_2$-CH(OH)-$CH_2$- sein,

$R^3$ — außerdem Ia

$R^5$ — H, $CH_3$, $C_2H_5$, $C_3H_7$, $C_4H_9$, Phenyl,

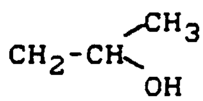 ,

$CH_2$-$CH_2$-OH, $CH_2$-$CH_2$-$OCH_3$,

$R^2$ — -$CH_2CH_2$-, -$(CH_2$-$)_3$-, -$(CH_2$-$)_4$-, -$(CH_2$-$)_6$-,

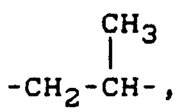 ,

-$(CH_2$-$)_3$-O-$(CH_2$-$)_2$-, -$(CH_2$-$)_2$-O-$(CH_2$-$)_2$-,

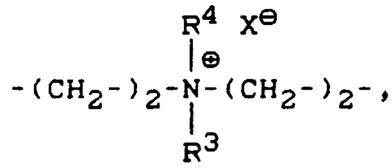

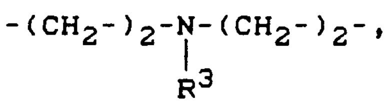

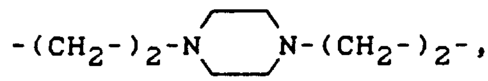

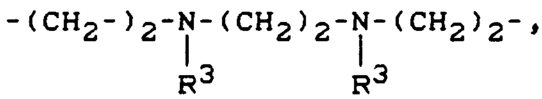

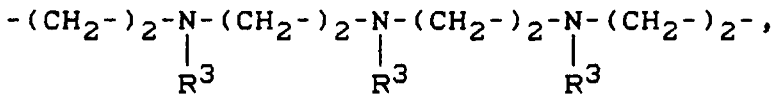

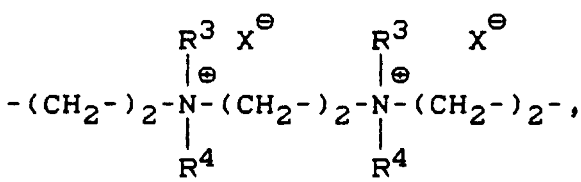

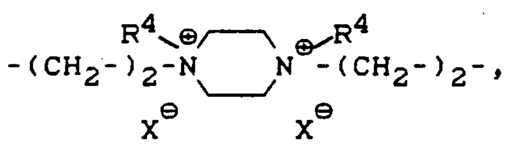

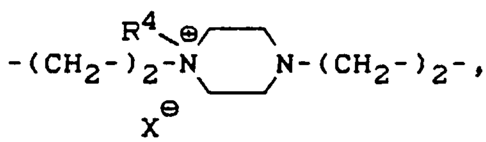

$R^3$ und $R^5$ mit dem N-Atom die Gruppe

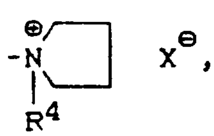

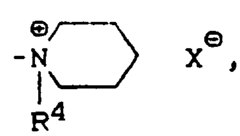

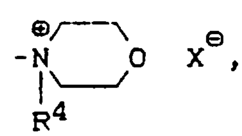

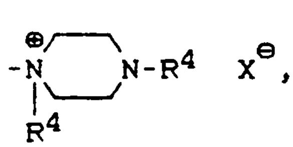

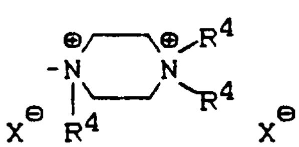

oder die entsprechenden basischen Heterocyclen vor der Salzbildung oder Quarternierung

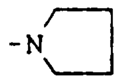 , 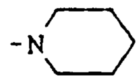 , 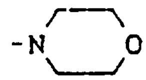 , 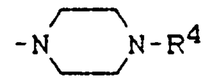

$R^1$, $R^2$ und $R^5$ zusammen mit dem N-Atom die Gruppe

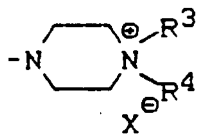 , 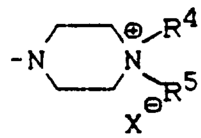 oder 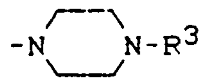 ,

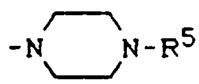

$X^\ominus$ Chlorid, Bromid, Iodid, $R^8SO_4^\ominus$, Benzolsulfonat, Toluolsulfonat, Methansulfonat, Phosphat,

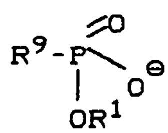 , 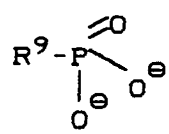

mit $R^9$ = OH, $OR^1$, $R^1$, insbesondere OH, $CH_3O$, $C_2H_5O$, $CH_3$, $C_2H_5$

m 0,1 - 2,5,

p 0,1 - 2,5,

n 1 - 4.

Besonders bevorzugt sind folgende Bedeutungen:

R H, Na, $CH_3$, $C_2H_5$, $C_2H_4OH$,

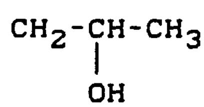

$R^1$ H

$R^3$ und $R^4$ H, $CH_3$, $C_2H_5$, $CH_2CH_2OH$,

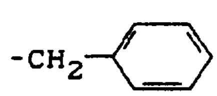 ,

$CH_2=CH-CH_2$,

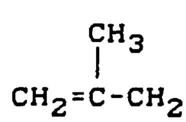

| | |
|---|---|
| $R^3$ oder $R^4$ | $-CH_2-CH_2-$, $-(CH_2)_4-$, $-(CH_2)_6-$, $-CH_2-CH(OH)-CH_2-$, $-CH_2-CH=CH-CH_2$, |
| $R^3$ | außerdem Ia |
| $R^5$ | $CH_3$, $C_2H_5$, $CH_2CH_2OH$ |
| $R^2$ | $-(CH_2-)_2-$, $-(CH_2-)_3-$, $-(CH_2)_6-$ |

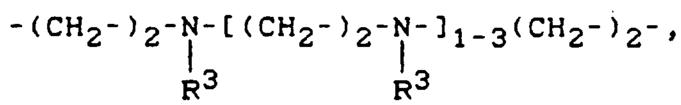

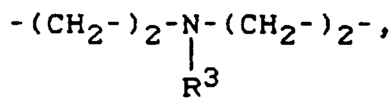, 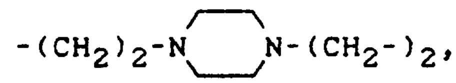,

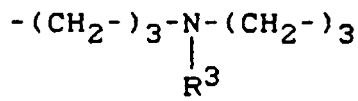

| | |
|---|---|
| | oder die entsprechenden salzartigen oder quarternierten Gruppen |
| $R^3$ und $R^5$ | mit dem N-Atom die Gruppe |

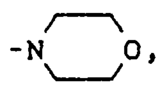, 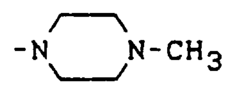

| | |
|---|---|
| | oder die entsprechenden quarternierten Gruppen |
| $X^{\ominus}$ | Chlorid, Bromid, Iodid, $R^1SO_4^-$, Toluolsulfonat, Methansulfonat, |
| m | 0,2 - 2,5, |
| n | 1 oder 2, |
| p | 0,1 - 2,2. |

Ganz besonders bevorzugt sind folgende Bedeutungen

| | |
|---|---|
| R | H, Na, $CH_3$, |
| $R^1$ | H, |
| $R^3$, $R^4$ und $R^5$ | H, $CH_3$, $CH_2CH_2OH$, $C_2H_5$, |
| $R^4$ oder $R^3$ | auch $-CH_2-CH(OH)-CH_2$, $-(CH_2)_6-$, |
| $R^3$ | außerdem Ia |
| $R^2$ | $-(CH_2-)_3-$, |
| $X^{\ominus}$ | Chlorid, $CH_3SO_4^{\ominus}$, Bromid, |
| n | 1, |
| m | 0,2 - 2,0, |
| p | 0,1 - 1,9. |

Die Erfindung betrifft weiterhin ein Verfahren zur Herstellung eines Polysaccharides durch Umsetzung von Estern der Struktur IV

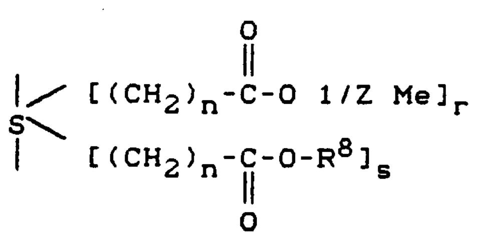

(IV)

mit einem Amin der Struktur V

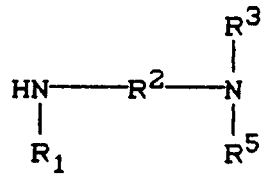

(V)

worin bedeuten

| | |
|---|---|
| r | eine Zahl von 0 bis 2,5, |
| s | eine Zahl von 2,9 bis 0,05, |
| r + s | eine Zahl von 0,05 bis 3,0 |
| $R^8$ | $C_{1-12}$-Alkyl, $C_{5-6}$-Cycloalkyl, $C_{6-12}$-Aryl, $c_{7-12}$-Aralkyl, $\beta$-Hydroxyalkyl |

und worin die übrigen Substituenten die in Anspruch 1 angegebene Bedeutung haben.

Die Bildung der erfindungsgemäßen Polysaccharidderivate erfolgt hierbei unter Austritt des Restes $R^8$ OH, gegebenenfalls in Gegenwart von $H^+$ oder $OH^-$ Ionen.

Ganz besonders bevorzugte Polysaccharide sind dadurch gekennzeichnet, daß bedeuten

| | |
|---|---|
| R | H, Na, $CH_3$, |
| $R^1$ | Wasserstoff, |
| $R^2$ | $-(CH_2-)_3-$, |
| $R^3$, $R^4$ und $R^5$ | $CH_3$, $CH_2CH_2OH$, $C_2H_5$, H, |
| $X^\ominus$ | Chlorid, $CH_3SO_4^\ominus$, Bromid, |
| n | 1 |
| r | 0,1 - 1,9 |
| s | 0,2 - 2,0 |
| s | Glucose- oder Pentoseeinheit, |

In einer besonders bevorzugten Ausführungsform ist die Monosaccharideinheit s zu einer substituierten Zelluloseeinheit verknüpft.

Eine weitere besonders bevorzugte Ausführungsform ist dadurch gekennzeichnet, daß das Polysaccharid als Salz II vorliegt und daß B folgender Formel entspricht

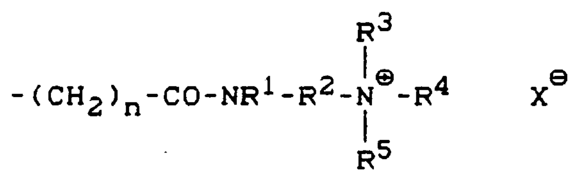

worin

n, $R^1$, $R^2$, $R^3$ , $R^4$, $R^5$ und $X^\ominus$ die in Anspruch 1 angegebene Bedeutung haben.

Salze II werden vorzugsweise hergestellt durch Umsetzung von Polysaccharidderivaten der Formel (I) mit Verbindungen der Formel (VI)

$(R^{10})_uX$ (VI)

worin bedeuten

| | |
|---|---|
| $R^{10}$ | = $R^4$ mit Ausnahme des Restes Ia, |
| u | 1 oder 2 |
| X | ein in der Polysaccharidchemie üblicher Anion $X^\ominus$ bildender Substituent. |

Man hat nach US-PS 3 904 600 schon Ester von Carboxylmethylcellulose mit Amin umgesetzt. Sowohl die Veresterung der Carboxymethylcellulose wie auch die Aminolyse des Esters aber wurden sehr aufwendig und umständlich in Lösung durchgeführt. Man erhielt ein Produkt mit dem Strukturelement

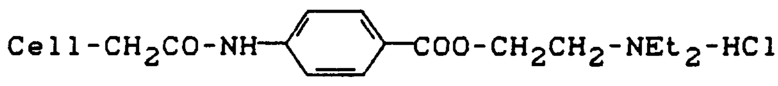

bei der Aminolyse mit 2-Diethylamino-p-aminobenzoat. Dieser Rest ist hinsichtlich der in der vorliegenden Erfindung genannten Verwendung der basischen und kationischen Polysaccharidderivate ungeeignet, da er sehr voluminös ist und eine leicht verseifbare Estergruppe aufweist, wodurch schon bei der Synthese eine Abspaltung des Restes $HO-CH_2CH_2-NEt_2 \bullet HCl$ erfolgen kann in Konkurrenz zur Aminolyse des Celluloseesters und auch bei Lagerung und Anwendung in wäßriger Lösung die basische Aminogruppe abgespalten wird, die Aktivität des Polysaccharidderivates sinkt und unerwünschte physiologische Wirkungen hervorgerufen werden können.

Geeignete Polysaccharidester zur Herstellung der erfindungsgemäßen Polysaccharide sind solche der Struktur II wie sie beispielsweise beschrieben sind in der DE-PS 957 938, EP 104 567, J. App. Polym. Sci. 32 (6) 5657-9 (1986) besonders aber solche, die nach DE 38 42 947 hergestellt sind. Ausgangsprodukte für derartige Ester sind Polysaccharide wie Polyglucosane wie Cellulose, die verschiedenen Derivate der Cellulose wie Methylcellulose oder gemischte Celluloseether wie Methyl-hydroxyethylcellulosen, Carboxymethylcellulose, ihre verschiedenen Salze mit Natrium-, Kalium-, Calcium- oder Ammonium- besonders quartären Ammoniumionen; Cellulosesulfat mit verschiedenen Gegenionen, etwa des Natriums, Kaliums, Calciums, Ammoniums oder quartärer Ammoniumgruppen; Polygalactosane; auch gemischte Polysaccharide wie Hemicellulosen.

Bevorzugte Ausgangsprodukte sind Cellulose und ihre Derivate, Stärke und Dextrine, besonders bevorzugt sind Cellulose, Methylcellulose, Ethylcellulose, Hydroxyethylcellulose, Hydroxypropylcellulose, Carboxymethylcellulose und deren Salze und Galaktosane.

Geeignete Amine zur Herstellung der erfindungsgemäßen Polysaccharidderivate sind solche der allgemeinen Struktur V. In den Fällen, in denen $R^3$ und/oder $R^5$ H sind, erhält man nach der Umsetzung mit IV gegebenenfalls in Wasser unlösliche und quellfähige Produkte, entsprechend der Sturktur I mit $R^3$ = Ia, die eine Vernetzung anzeigt.

In den Fallen, in denen in V $R^3$ und $R^5$ nicht H sind, erhält man in der Regel in Wasser und gegebenenfalls auch in Alkoholen lösliche Produkte.

Die Löslichkeit der erfindungsgemäßen Amino- oder Ammoniumpolysaccharide in Alkoholen oder Wasser hängt sowohl vom Ausgangsmaterial, vom Amin (s.o.), vom Substitutionsgrad, vom Alkylierungsmittel und vom Quaternierungsgrad ab und kann nach Bedarf eingestellt werden. So erhält man beispielsweise mit bisprimären Diaminen vernetzte unlösliche Produkte, mit primär/tertiären Diaminen lösliche, während bifunktionelle Alkylierungsmittel wiederum unlösliche Polysaccharidderivate ergeben.

In manchen Fällen können quaternisierte Derivate, die auch Carboxylendgruppen enthalten, insbesondere nach längerem Trocknen unlösliche Produkte bilden, vermutlich infolge einer Art "inneren" Salzbildung. Durch geringe Mengen an Base können sie jedoch leicht wieder in Lösung gebracht werden.

Geeignete Amine der Formel V sind beispielsweise folgende:

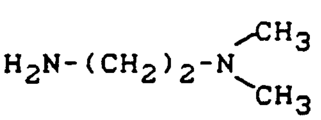 , 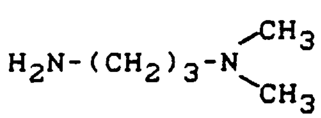 , 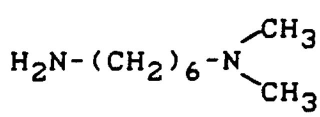 ,

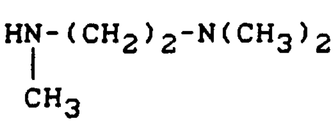 , 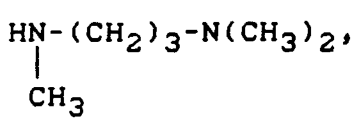 ,

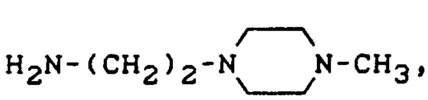 , 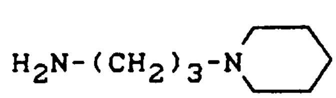 ,

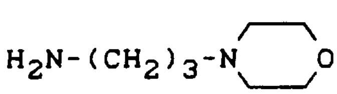 , 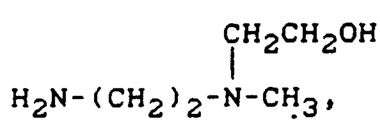 ,

$H_2N-(CH_2)_2-[NH-(CH_2)_2]_{1-5}-NH_2$, $H_2N-(CH_2)_3N(CH_2CH_2OH)_2$,

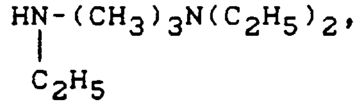

$H_2N-(CH_2)_2-O-(CH_2)_2-N(CH_3)_2$,

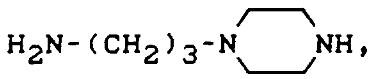

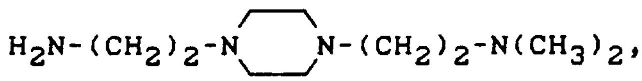

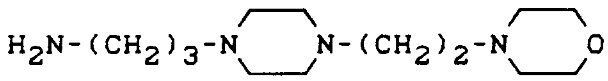

,

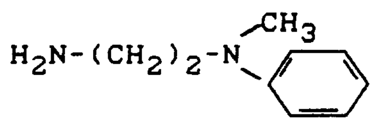

,

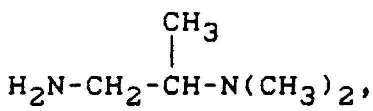

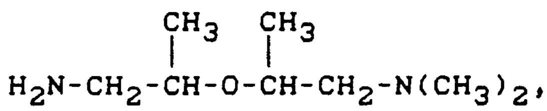

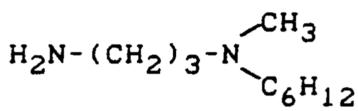

,

$H_2N-(CH_2)_3-N(CH_2CH_2OCH_3)_2$,

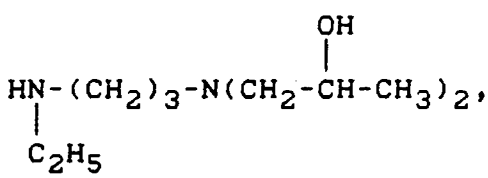

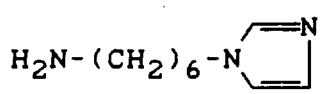

,

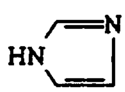

,

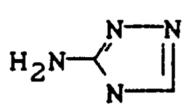

,

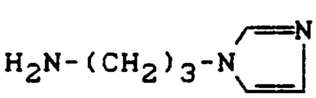

,

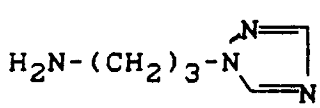

,

bevorzugt sind beispielsweise:
$H_2N-(CH_2)_2N(CH_3)_2$, $H_2N-(CH_2)_3-N(CH_3)_2$,
$H_2N-(CH_2)_6-N(CH_3)_2$, $H_2N-(CH_2)_3N(CH_2CH_2OH)_2$,
$H_2N-(CH_2)_3-N(C_2H_5)_2$,

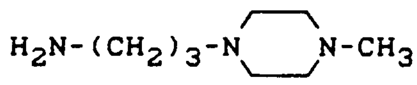,

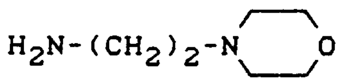, 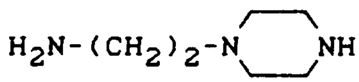,

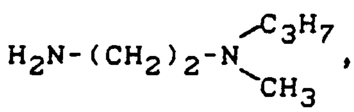, 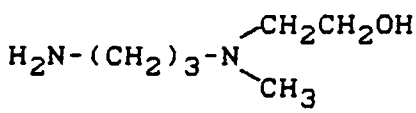,

$H_2N-(CH_2)_2-NH-(CH_2)_2-NH_2$

Geeignete Verbindungen $(R^{10})_uX$ der Formel VI sind z.B. HCl, HBr, $CH_3SO_3H$, $H_3PO_3$, $H_3PO_4$ • $CH_3PO(OH)_2$,

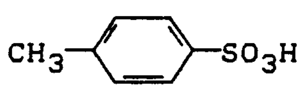, ø-$SO_3H$

ferner Methylchlorid, Ethylchlorid, Propylchlorid, Butylchlorid, Chlorethanol, Chlorpropanol, Epichlorhydrin, 1-Chlorpropandiol-2,3, Chlorbutanol, 1-Chlor-2-methoxyethan, 1-Chlorpropanol-2, Benzylchlorid, (Meth)-Allylchlorid, Methylbromid, Methyliodid, Methylmethansulfonat, Methylbenzolsulfonat, Methyltoluolsulfonat, Trimethylphosphat, Methyl-O,O-dimethylphosphonat, Benzylmethansulfonat, Allyltosylat und Benzylmesylat, ferner 1,2-Dichlorethan, 1,4-Dibrombutan, 1,6-Dibromhexan, Epichlorhydrin, 1,4'.Dichlorbuten-2 und 1,6-Ditosyl-hexan, 1,6-Dimesyl-hexan, $\beta,\beta'$-Dibrom-diethylether, $\beta,\beta'$-Dichlordiethylether.

Bevorzugt sind beispielsweise Methylchlorid, Chlorethanol, Dimethylsulfat, Methylmesylat, Methyltosylat, (Meth)Allylchlorid, Benzylchlorid, 1,6-Dibromhexan, Epichlorhydrin, 1,4-Dichlorbuten-2.

Die Umsetzung kann in einem Überschuß des jeweils als Reaktionspartner benutzten Amins oder in einem Suspendiermittel durchgeführt werden. Geeignete Suspendiermittel sind Kohlenwasserstoffe, Halogenkohlenwasserstoffe, Ether, Alkohol und Carbonsäureamide.

Genannt seien beispielsweise Cyclohexan, Heptan, Isooctan, Benzol, Toluol, Xylol, Chlorbenzol, Dichlorbenzol, Methylenchlorid, Chloroform, Diethylether, Diisopropylether, Dibutylether, Dioxan, Benzodioxan, Anisol, Dimethoxybenzol, Ethylenglykol-dimethylether, Isopropanol, Isobutanol, Methanol, tert.-Butanol, Isoamylalkohol, Dimethylformamid, Dimethylacetamid, NMethylpyrrolidon, N-Methylcaprolactam. Diese Lösungsmittel kann man sowohl bei der Aminierung- wie der Alkylierungsreaktion verwenden.

Es ist nicht zweckmäßig, die Umsetzungen der Carbalkoxyester der Polysaccharide mit Aminen zu den Aminoamiden wie auch deren Alkylierung zu den kationischen Polysacchariden an völlig trockenen Polysaccharidderivaten durchzuführen, da dann häufig eine sehr langsame, unzureichende und daher nicht gut reproduzierbare Reaktion und Substitution erfolgt. In der Regel enthalten die Polysaccharide einige Prozentanteile an Wasser, so daß eine zusätzliche Verwendung von Wasser nicht in jedem Fall erforderlich ist. Sollte jedoch der Wassergehalt gering oder nicht bekannt sein, empfiehlt sich ein Zusatz von Wasser zum Reaktionsgemisch. Er kann zwischen 4 bis 120 Gew.-% bezogen auf das eingesetzte Polysaccharid betragen. Der Wasserzusatz ist an sich nicht sehr kritisch. Er sollte jedoch eine solche Menge nicht überschreiten, die eine unnötig starke Anquellung oder gar Lösung des Polysaccharids bewirkt, damit Reaktionsführung und Aufarbeitung nicht erschwert werden.

Die Reaktion wird bei Temperaturen zwischen 20 bis 110° durchgeführt. Säuren oder Alkalien können gegebenenfalls als Katalysatoren zugesetzt werden in Mengen von 0,01 bis 5 Gew.-% bezüglich Cellulosederivat. Geeignet sind z.B. HCl, $H_2SO_4$, $H_3PO_3$, NaOH, KOH, LiOH, $Ca(OH)_2$, $Mg(OH)_2$.

Das Molverhältnis der Polysaccharidester zu den Aminen V bzw. den Verbindungen VI beträgt zwischen 1:0,5 bis 1:10. Natürlich können auch Molverhältnisse jenseits von 1:10 ohne Gefahr eingesetzt werden.

Die Reaktionszeit liegt im allgemeinen zwischen 3 und 20 h.

Die Aufarbeitung erfolgt nach an sich bekannten Verfahren durch Abtrennen und Waschen mit Lösungsmitteln, um die abgespaltene Hydroxylverbindung $R^8OH$ und überschüssiges Amin bzw. überschüssiges $(R^{10})_uX$ zu entfernen. Bei geschickter Wahl von Lösungsmitteln, Hydroxylverbindungen $R^8OH$, Amin und Alkylierungsmittel können diese Verbindungen aus den Reaktionslösungen durch Destillation wiedergewonnen und erneut verwendet werden.

Die neuen funktionellen Polysaccharide stellen auch zwitterionische Verbindungen dar, die nebeneinander die anionische Gruppe VII

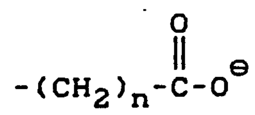

VII

für den Fall, daß r >0 und/oder $R^8$ = H oder Me und die kationische VIII

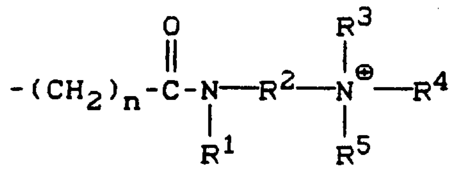

VIII

im gleichen Molekül enthalten sind. Je nachdem welche der beiden Gruppen einen größeren DS aufweist, überwiegt der anionische oder kationische Charakter.

Die erfindungsgemäßen wasserlöslichen kationischen Polysaccharide sind geeignet als Zusatzmittel zu hygienischen und kosmetischen Reinigungs- und Pflegemitteln, als Hilfsmittel für die Papierfabrikation und zur Behandlung von Textilfasern zur Verbesserung des Griffs.

Weiter finden die wasserlöslichen kationischen Polysaccharide als Aggregationsmittel ihre Anwendung. Hierunter wird die Flockung, Koagulation und Ausfällung verstanden. Flockungsmittel sind Prozeßhilfsmittel zur rationellen Gestaltung von fest-flüssig-Trennprozessen. Mit ihrer Hilfe kann die Absetzgeschwindigkeit in Wasser suspendierter Feststoffe, die häufig in kolloidaler Form vorliegen, entscheidend erhöht werden. Wirksame Flockungsmittel erreichen eine nahezu vollständige Ausflockung der suspendierten Partikel, so daß die Restfeststoffgehalte in der flüssigen Phase weitgehend minimiert werden. Weiterhin wird durch den Einsatz von Flockungsmitteln der Feststoffgehalt der festen Phase erhöht, wodurch eine maschinelle Entwässerung der abgesetzten Schlämme technisch und ökonomisch günstig gestaltet werden kann.

Innerhalb der Flockungsmittel ist zwischen Primär-Flockungsmitteln und Flockungshilfsmitteln zu unterscheiden. Primär-Flockungsmittel sind chemische Verbindungen, die in Wasser schwerlösliche Niederschläge bilden. Dazu gehören die in der Praxis in großem Umfang eingesetzten Fe-, Al- und Ca-Salze. Ihr Zusatz bewirkt zunächst eine Ladungsneutralisation, der meist durch negative Oberflächenladungen stabilisierten Suspensionsteilchen, wodurch die elektrische Doppelschicht der Partikeln zerstört wird und eine rasche Koagulation eintritt, Bei fortschreitender Hydrolyse der anorganischen Verbindungen entstehen wasserdurchtränkte voluminöse Flocken, die Wasserinhaltsstoffe einschließen und ausfällen. Nachteilig bei der Blockung mit den preisgünstigen anorganischen Metallsalzen wirken sich die Temperaturabhängigkeit der Flockung, die Bindung an einem engen pH-Bereich, die relativ geringe Sedimentationsgeschwindigkeit der Flocken und die Bildung großer Schlammvolumina aus.

Flockungshilfsmittel sind kationische, anionische oder neutrale wasserlösliche Polymere hoher Molmasse, die diese Nachteile nicht aufweisen. Durch Ionen- und Dipolwechselwirkungen der Polymere mit den suspendierten Partikeln erfolgt auch hier zunächst eine Koagulation der Kolloidteilchen. Bei hinreichend hoher Molmasse sind die Makromoleküle in der Lage, mehrere der destabilisierten Partikeln zu schnellsedimentierenden scherstabilen Makroflocken zu verbinden. Flockungshilfsmittel werden im großen Umfang in der Wasseraufbereitung und Abwasserbehandlung in der Erdöl-, Papier-, Kohle- und Erzindustrie sowie in einigen Zweigen der chemischen Industrie technisch genutzt.

Bei Einsatzmengen von 0,01 bis 0,5 Gew.-% lassen sich die erfindungsgemäß hergestellten kationischen Polysaccharide vorteilhaft einsetzen. Je nach Kationisierungsgrad und Molmassen lassen sie sich für jedes Anwendungsgebiet maßschneidern.

In vielen Bereichen der Herstellung und Lagerung flüssiger und halbfester Produkte stellen Mikroorganismen durch ihre Vermehrungsfähigkeit und ihren Stoffwechsel ein Problem dar. So stehen z.Z. Methoden zur Entfernung einmal gebildeten Mykotoxine unter gleichzeitiger Werterhaltung des Lebensmittels nicht zur Verfügung (H.K. Frank, Schriftenreihe des Bundes für Lebensmittelrecht und Lehensmittelkunde, Heft 76, 1974). Die erfindungsgemäß hergestellten wasserunlöslichen kationischen Polysaccharide finden Verwendung in der Herstellung von hochaktiven Filtermaterialien. Diese sind aus den obengenannten Gründen in der pharmazeutischen Industrie und in der Getränke-Industrie von hohem Interesse.

Die Wirkungsweise von Filterschichten beruht hauptsächlich auf

- mechanischer Siebwirkung,
- Tiefenwirkung,
- Absorptionswirkung.

Aufgrund der mechanischen Siebwirkung werden grobe Trubteilchen an der Schichtoberfläche festgehalten. Sie dringen nicht in die Poren ein. Feinere Trubteilchen dringen tiefer in die Schicht ein, verfangen sich im Materialgeflecht und setzen nach und nach die Poren zu (Tiefenwirkung). Bedingt im wesentlichen durch die elektrischen Ladungsverhältnisse der Trubteilchen zu den Rohstoffen werden Trubstoffe, die in die Schicht eingedrungen sind, an den Porenoberflächen adsorbiert (Adsorptionswirkung). Diese Wirkungen sind abhängig von den Materialeigenschaften der Rohstoffe (Kieselgur, Cellulose, Baumwolle). Die Leistungsfähigkeit einer Filterschicht wird durch die Klärschärfe definiert. Sie wird durch ein Zusammenspiel der Sieb-, Tiefen- und Adsorptionswirkung bestimmt.

Bei der Keimfiltration zeigen herkömmliche Filterschichten eine unzureichende Klärschärfe aufgrund einer mangelnden Adsorptionsfähigkeit.

Versuchsfilter, bei denen ein Teil des Rohstoffes Cellulose durch die erfindungsgemäßen kationischen Polysaccharide ersetzt wurde, zeigten bei der Keimfiltration eine verstärkte Wirksamkeit gegenüber pyrogenen und endotoxinen Keimen als Faserfilter oder Aluminiumoxid gefüllte Filterschichten.

Beispiel 1

120 g (0,5 Mol) einer Natriumcarboxymethylcellulose mit einem DS von 1 wird in 300 ml einer Mischung von 10 % Wasser und 90 % Isopropanol 2 h bei 25° und 2 h bei 70° mit 76 g (0,6 Mol) Dimethylsulfat umgesetzt. Dann wurde abgesaugt, mit Isopropanol gewaschen und bei 50° im Vakuum getrocknet. Man erhälkt 141 g eines wasserunlöslichen Celluloseethers, dessen IR-Spektrum neben einer starken Esterbande bei 1755 $cm^{-1}$ eine schwache Carboxylatbande bei 1610 $cm^{-1}$ aufweist. Die Veresterung ist danach zu 78 % erfolgt.

Beispiel 2

30 g aus Beispiel 1 und 21 g 3-N,N-Dimethylamino-propylamin werden in 100 ml Toluol 5 h bei 100°C gerührt. Nach Abdekantieren der Lösung, mehrmaliges Auswaschen mit Isopropanol und Trocknen bei 50° im Vakuum erhält man 22 g wasserlösliche Aminocellulose mit einem N-Gehalt von 6,7. Dies entspricht einer Umwandlung des Esters in Aminoamid von ca. 90 % und einem DS bezüglich Aminofunktion von 0,7 und bezüglich Carboxylat von 0,2 bis 0,3. Das IR-Spektrum weist eine breite, starke Carbonamidbande bei 1670 $cm^{-1}$ auf.

Beispiel 3

120 g (0,5 Mol) einer Carboxymethylcellulose mit einem DS von 1,0 und 8,3 % Feuchte wird in Chloroform suspendiert und 2 h mit 76 g (0,6 Mol) Dimethylsulfat unter Rückfluß gekocht. Nach Absaugen, mehrmaligem Waschen mit Chloroform und Trocknen an der Luft erhält man 142 g eines Cellulosederivates, das im IR-Spektrum Carboxylat- und Carbonesterbanden (1757 und 1610 $cm^{-1}$), aufweist und in Wasser nicht löslich ist. Der Veresterungsgrad beträgt 50 % (IR-Analyse).

Beispiel 4

71 g des Cellulosederivates aus Beispiel 3 werden in Toluol mit 51 g (0,5 Mol) 1-Amino-3-(dimethylamino)-propan 8 h bei 95° gerührt. Nach Absaugen, Waschen mit Toluol und mehrmals mit Isopropanol und nach Trocknen bei 105° in Vakuum erhält man 53 g pulverige Aminoamidcellulose mit einem N-Gehalt von 3,7 % entsprechend einem DS von ca. 0,4 bezogen auf Aminoamidgruppe, die im IR-Spektrum Amid- und Carboxylatbanden aufweist.

Beispiel 5

278 g (ca. 1 Mol) einer frisch hergestellten Natriumcarboxymethylcellulose (DS 1, Feuchte ca. 15 %) werden bei 90° und 25 bar mit einem ca. 12-13 molaren Überschuß an Methylchlorid 15 h umgesetzt. Man kühlt ab, entspannt, wäscht mit 70 %igen Methanol und trocknet bei 50°C im Vakuum.

Man erhält 233 g wasserunlöslicher veresterter Carboxymethylcellulose mit einer starken Esterbande bei 1755 $cm^{-1}$ und einer schwachen Carboxylatbande bei 1610 $cm^{-1}$ im IR-Spektrum. Der Umsatz des Na-Carboxylates zum Ester beträgt etwa 82 %.

Beispiel 6

80 g veresterte Carboxymethylcellulose aus Beispiel 5 werden in 200 ml Toluol und 106 g 3-N,N-Dimethylaminopropylamin suspendiert und 9 h bei 60° gerührt. Danach ist in Esteraminolyse zu ca. 90 % und nach weiteren 6 h bei 95° vollständig abgelaufen. Nach Absaugen, mehrmaligem Waschen mit Toluol und Trocknen bei 50° im Vakuum erhält man 86 g pulverige, wasserlösliche Aminocellulose mit einem N-Gehalt von 8,1 % einem DS von ca. 0,8 bezüglich Aminofunktion.

Beispiel 7

100 g aus Beispiel 6 werden in 300 ml Toluol und 100 g Dimethylsulfat suspendiert und 12 h bei 50° gerührt. Nach Absaugen, Waschen mit Toluol und Trocknen bei 50° im Vakuum erhält man 110 g wasserlösliches kationisches Cellulosederivat mit einem N-Gehalt von 5,5 % und einem S-Gehalt von 6,2 %. DerDS bezüglich Ammoniumgruppe beträgt ca. 0,8.

Beispiele 8 bis 17

Allgemeine Vorschrift:
Carboxymethylcellulosen mit einem Gesamt DS von DSg und einem Ester-DS von $DS_{est}$, in denen der nichtveresterte Teil als Na-Salz vorliegt, wird in Isopropanol oder Toluol suspendiert, mit dem für die Umsetzung ausgewählten Amin versetzt und 10 h bei 90 bis 95° gerührt, abgesaugt, durch Waschen mit Toluol oder Isopropanol von überschüssigem Amin befreit, bei 50° im Vakuum getrocknet und der N-Gehalt der erhaltenen Amino-amido-cellulosen durch Elementaranalyse bestimmt. Die IR-Analyse zeigt in jedem Fall entsprechend dem DS mehr oder weniger ausgeprägte Amid-, Ester- und Carboxylatbanden.

Die folgende Tabelle 1 zeigt die einzelnen Daten und Ergebnisse.

Tabelle 1

| Nr. | CMC DSg | DSest | Einsatz-menge g | Amin g | Suspend.m. g | Ausbeute g | N-Gehalt % | Löslichkeit $H_2O$ | $CH_3OH$ |
|---|---|---|---|---|---|---|---|---|---|
| 8 | 0,90 | 0,12 | 20 | DAPA 20 | Toluol 50 | 18,1 | 1,5 | + | - |
| 9 | 0,90 | 0,30 | 200 | DAPA 200 | Toluol 500 | 168 | 2,8 | + | (+) |
| 10 | 1,72 | 1,55 | 100 | DAPA 100 | Toluol 400 | 139 | 9,4 | + | + |
| 11 | 0,90 | 0,83 | 150 | PEHA 150 | Toluol 400 | 160 | 4,3 | - | - |
| 12 | 0,90 | 0,83 | 150 | DAPA 150 | Toluol 400 | 183 | 6,6 | + | (+) |
| 13 | 1,66 | 1,51 | 209 | DETA 200 | Toluol 500 | 261 | 8,8 | + | |
| 14 | 0,90 | 0,70 | 20 | DAPA 20 | Toluol 50 | 19,3 | 6,8 | + | - |
| 15 | 0,90 | 0,83 | 20 | AEP 20 | Toluol 50 | 24,9 | 3,0 | - | - |
| 16 | 0,90 | 0,83 | 150 | ATA 150 | Isopropanol 500 | 184 | 15,2 | - | - |
| 17 | 1,72 | 1,55 | 20 | DAPA 20 | Isopropanol 200 | 20,8 | 10,1 | + | |

Erläuterungen zu Tabelle 1

CMC = Carboxymethylcellulosederivat
DAPA = 3-N,N-Dimethylaminopropylamin
PEHA = Pentaethylenhexamin
DETA = Diethylentriamin
AEP = Aminoethylpiperazin
ATA = 3-Aminotriazol

+ = löslich
(+) = angelöst oder stark gequollen
- = unlöslich

Beispiele 18 bis 24

Allgemeine Vorschrift:
Aminocarbonamidcellulosen aus den Beispielen 9, 10, 11, 12, 13 und 16 werden suspendiert, mit jeweils der gleichen Menge Chlorethanol versetzt, 15 h bei 70° gerührt, mehrfach gründlich mit Toluol gewaschen und bei 50° im Vakuum getrocknet (siehe Tabelle 2).

Tabelle 2

| (aus Nr.) Nr. | CMC DSg | CMC DSest | Einsatzmenge g | Suspend. m. g | Ausbeute g | N-Gehalt % | Cl-Gehalt % |
|---|---|---|---|---|---|---|---|
| (16) 18 | 0,90 | 0,83 | 75 | Toluol 300 + $H_2O$ 15 | 68 | 10,8 | 2,2 |
| (9) 19 | 0,90 | 0,30 | 70 | Toluol 280 + $H_2O$ 14 | 67 | 2,4 | 4,2 |
| (10) 20 | 1,72 | 1,55 | 50 | Toluol 500 + $H_2O$ 10 | 48 | 6,5 | 8,1 |
| (11) 21 | 0,90 | 0,83 | 80 | Toluol 320 + $H_2O$ 16 | 87 | 3,6 | 4,5 |
| (12) 22 | 0,90 | 0,83 | 80 | Toluol 320 + $H_2O$ 16 | 92 | 5,3 | 7,1 |
| (13) 23 | 1,66 | 1,51 | 100 | Toluol 400 + $H_2O$ 20 | 100 | 5,9 | 7,0 |
| (10) 24 | 1,72 | 1,55 | 50 | Toluol 200 + $H_2O$ 10 | 59 | 7,8 | 10,2 |

In der Tabelle 2 sind die Ergebnisse der Versuche 17 bis 23 aufgelistet. Aus den N- und Cl-Gehalten errechnen sich hohe Substitutionsgrade, wie sie durch die Ausgangsprodukte, die veresterte Carboxymethylcellulosen vorgegeben sind.

Beispiele 25 bis 31

Allgemeine Vorschrift:

Aminocarbonamidcellulosen aus den Beispielen 9, 10, 13 und 14 werden suspendiert und mit verschiedenen Alkylierungsmitteln 10 h bei 50° unter Rühren umgesetzt. Nach dem Waschen mit dem jeweils verwendeten Suspendierungsmittel zur Abtrennung des überschüssigen Alkylierungsreagenzes werden die quarternären Cellulosen bei 50° im Vakuum getrocknet.
Weitere Angaben und Resultate gibt die Tabelle 3 wieder.

Tabelle 3

| (aus Nr.) Nr. | CMC DSg | CMC DSest | Einsatzmenge g | Suspend.m. g | Alkylier.m. g | Ausbeute g | Gehalt % N | Gehalt % Cl | Gehalt % S | Löslichkeit $H_2O$ |
|---|---|---|---|---|---|---|---|---|---|---|
| (9) 25 | 0,90 | 0,30 | 50 | Toluol 200 | DMS 50 | 50 | 2,1 | | 4,7 | (+) |
| (14) 26 | 0,90 | 0,70 | 50 | Toluol 200 | DMS 50 | 51 | 5,3 | | 5,5 | + |
| (14) 27 | 0,90 | 0,70 | 50 | Isoprop. 200 | DMS 50 | 52 | 5,2 | | 5,3 | + |
| (10) 28 | 1,72 | 1,55 | 50 | Isoprop. 200 | AC 50 | 63 | 7,2 | 7,6 | | (+) |
| (10) 29 | 1,72 | 1,55 | 50 | Isoprop. 200 | BC 50 | 64 | 5,6 | 6,1 | | + |
| (13) 30 | 1,66 | 1,51 | 50 | 160 Isopr. + 40 $H_2O$ | DMS 50 | 68 | 4,5 | | 7,8 | - |
| (13) 31 | 1,66 | 1,51 | 50 | 180 Isopr. + 20 $H_2O$ | DMS 50 | 72 | 4,5 | | 8,1 | - |
| (13) 32 | 1,66 | 1,51 | 25 | Toluol 150 $H_2O$ 5 | DBH 25 | 33 | 7,1 | 6,7 Br | | - |

DMS = Dimethylsulfat, AC = Allylchlorid, BC = Benzylchlorid, DBH = 1,6-Dibromhexan

Anwendungsbeispiel 1

Durchführung des Flockungstests

Von den zu untersuchenden Flockungsmitteln werden 0,2 %ige Lösungen hergestellt.
Im 500 ml Standzylinder werden je 7,5 g des Füllmittels SPS-China Clay eingewogen. Dann wird mit reinem Wasser oder mit Wasser, das durch Zumischung entsprechender Mengen der o.a. Lösungen der Flockungsmittel auf eine bestimmte Konzentration an Flockungsmittel gebracht wurde, jeweils auf 500 ml aufgefüllt, kräftig umgeschüttelt und die Flockung beobachtet` Nach 5 min Standzeit wird die Flockungshöhe (ml) bestimmt und die Wasserzone über dem Füllmittel visuell hinsichtlich Trübung abgemustert.
Als Vergleichsprodukt wird eine mit 1-Chlor-2-hydroxy-3-trimethyl quarternisierte Hydroxyethylcellulose entsprechend DOS 1 593 657 mit einem DS von 0,4 verwendet.
(siehe Tabelle 4)

Tabelle 4 Flockungstest mit SPS China Clay 15 g/l

| Flockungsmittel | 0 % | 0,01 % | 0,04 % | 0,10 % | 0,30 % | 0,50 % | DS $Q^+$ | DS Amin |
|---|---|---|---|---|---|---|---|---|
| Polymer IR 125 | | 90 ml | 95 ml | 90 ml | 105 ml | - | 0,4 | |
| nach DOS 1 593 657 Vergleich | | | | | | | | |
| nach Bsp. 9 erf.gem. | | - | 70 ml | 70 ml | 65 ml | 70 ml | - | 0,25 |
| nach Bsp. 19 erf.gem. | | 100 ml | 75 ml | 70 ml | 65 ml | 65 ml | 0,25 | |
| nach Bsp. 18 erf.gem. | | - | 80 ml | 75 ml | 55 ml | 35 ml | 0,60 | |
| ohne Flockungsmittel | 400 | | | | | | | |

Die Tabelle 4 zeigt, daß die erfindungsgemäßen derivatisierten Cellulosederivate eine deutlich raschere Sedimentation des China Clay bewirken als das handelsübliche Produkt Polymer IR 125. Selbst wenn der Gehalt an Wirksubstanz (Bsp. 19, DS 0,25) kleiner ist als bei der Vergleichssubstanz, erweist sich schon die Überlegenheit der neuen Cellulosederivate. Steigt der DS auf 0,6 ist die verbesserte Wirkung stark ausgeprägt. Erstaunlicherweise kann auch das basische, nicht quaternisierte Produkt aus Bsp. 9 als

hervorragendes Flockungsmittel eingesetzt werden.

## Patentansprüche

1. Polysaccharide enthaltend wiederkehrende Einheiten I oder ein Salz II davon

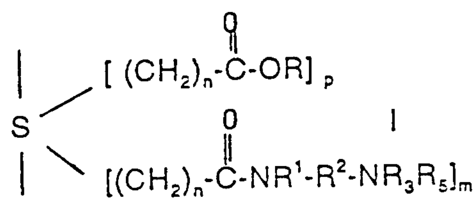 I

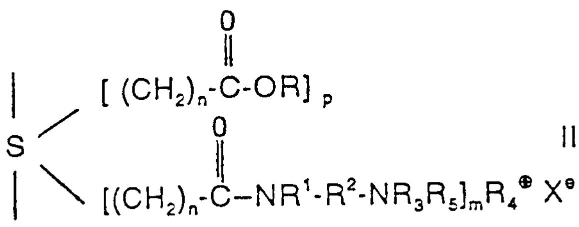 II

worin bedeuten

| | |
|---|---|
| S | eine Glucose-, Pentose- oder Galaktoseeinheit, oder eine derivatisierte Glucoseeinheit der Cellulose, |
| p | eine Zahl von 0 bis 2,9 |
| m | eine Zahl von 0,05 bis 2,9 |
| m + p | eine Zahl von 0,05 bis 3,0 |
| R | $C_{1-12}$-Alkyl, $C_{5-6}$-Cycloalkyl, $C_{6-12}$-Aryl, $C_{7-12}$-Aralkyl, $\beta$-Hydroxyalkyl und/oder 1/Z Me, worin Me ein Kation und Z die Wertigkeit des Kations ist, |
| $R^1$ | H, $C_{1-4}$-Alkyl, |
| $R^2$ | einen Alkylenrest, der durch wenigstens ein O- oder N-Atom oder eine olefinische Doppelbindung unterbrochen sein kann, |
| $R^3$ | H, einen gegebenenfalls durch eine OH- oder olefinische Gruppe substituierter Alkylrest, der durch wenigstens ein Heteroatom unterbrochen sein kann, einen Aralkylrest oder den Rest eines Polysaccharids der Formel Ia worin die Indices und Substituenten die oben angegebene Bedeutung haben, |

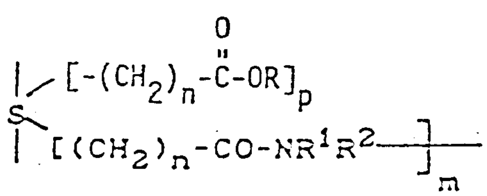 (Ia)

| | |
|---|---|
| $R^4$ | gleich oder verschieden von $R^3$ und ist mit dem selben N-Atom verbunden wie $R^3$ und kann nicht gleichzeitig mit $R^3$ die Bedeutung $C_2$-$C_8$-Alkylen oder Ia haben |
| $R^5$ | H, einen Alkyl-, Aralkyl- oder Arylrest |

und/oder

| | |
|---|---|
| $R^3$ und $R^5$ | zusammen mit dem gemeinsamen N-Atom einen gegebenenfalls ein weiteres Heteroatom enthaltenden Ring |

und/oder

| | |
|---|---|
| $R^1$ und $R^5$ | zusammen mit $R^2$ einen Ring |
| n | eine ganze Zahl von 1 bis 6, |
| $X^{\ominus}$ | ein Anion. |

2. Polysaccharide gemäß Anspruch 1, dadurch gekennzeichnet, daß $R^2$ einen Rest III darstellt

$-[R^6-Y-]_qR^7-$ III

worin bedeuten

| | |
|---|---|
| $R^6$ und $R^7$ | gleich oder verschieden, einen gegebenenfalls durch ein O-Atom unterbrochenen Alkylenrest mit 2 bis 6 C- Atomen, |

Y O oder die Gruppe

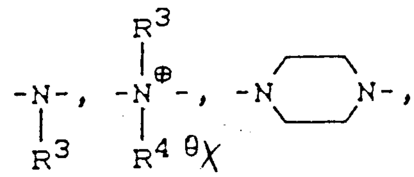

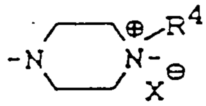 oder 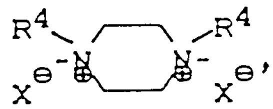

wobei $R^3$ die oben angegebene Bedeutung hat und $R^4$ die Bedeutung von $R^3$ hat mit der Einschränkung, daß $R^4$ nicht Ia ist,

q eine ganze Zahl von 1 bis 5.

$X^{\ominus}$ ein Anion.

**3.** Polysaccharide nach einem der vorhergehenden Ansprüche 1 oder 2, dadurch gekennzeichnet, daß bedeuten:

| | |
|---|---|
| R | H, Na, $CH_3$, |
| $R^1$ | Wasserstoff, |
| $R^2$ | $-(CH_2-)_3-$, |
| $R^3$,$R^4$ und $R^5$ | $CH_3$, $CH_2CH_2OH$, H, |
| $R^3$ | außerdem Ia |
| $X^{\ominus}$ | Chlorid, $CH_3SO_4^{\ominus}$, Bromid, |
| n | 1 |
| p | 0,1 bis 1,9 |
| m | 0,2 bis 2,0 |
| S | Glucose- oder Pentoseeinheit. |

**4.** Polysaccharide gemäß wenigstens einem der Ansprüche 1 - 3, dadurch gekennzeichnet, daß die Monosaccharideinheiten S zu einer Celluloseeinheit verknüpft sind.

**5.** Polysaccharide gemäß Anspruch 1, dadurch gekennzeichnet, daß sie als Salz II vorliegen und mit folgender Formeleinheit.

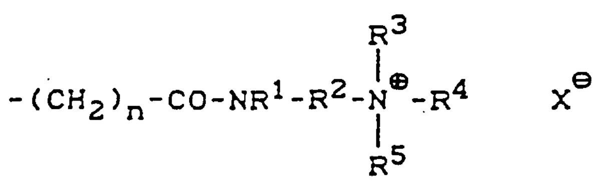

worin

n, $R^1$, $R^2$, $R^3$, $R^4$, $R^5$ und $X^{\ominus}$, p und m die in Anspruch 1 angegebene Bedeutung haben, und daß

1.) der Wassergehalt in der Reaktionsmischung wenigstens 4 - 120 Gew.-%, bezogen auf den Ester der Struktur IV, beträgt,

2.) das Molverhältnis der Polysaccharidester IV zu dem Amin V bevorzugt 1:0,5 bis 1:10 beträgt,

3.) die Reaktionszeit bevorzugt zwischen 3 - 20 h beträgt,

4.) die Reaktionstemperatur bevorzugt zwischen 20 und 110 °C beträgt,

5.) Säuren oder Alkalien als Katalysatoren in Mengen von 0,01 - 5 Gew.% bezüglich des Esterderivates IV zugegeben werden.

**6.** Verfahren zur Herstellung von Polysacchariden gemäß einem der Ansprüche 1 - 5 durch Umsetzung von Estern der Struktur IV

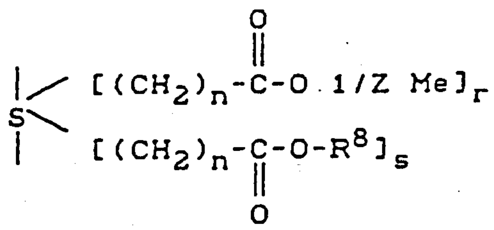

(IV)

mit einem Amin der Struktur V

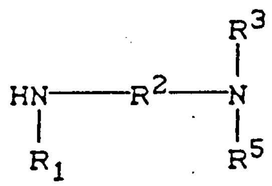

(V)

worin bedeuten

| | |
|---|---|
| r | eine Zahl von 0 bis 2,5, |
| s | eine Zahl von 2,9 bis 0,05, |
| r + s | eine Zahl von 0,05 bis 3,0 |
| $R^8$ | $C_{1-12}$-Alkyl, $C_{5-6}$-Cycloalkyl, $C_{6-12}$-Aryl, $C_{7-12}$-Aralkyl, $\beta$-Hydroxyalkyl |

und worin die übrigen Substituenten die in Anspruch 1 angegebene Bedeutung haben.

**7.** Verwendung der Polysaccharidderivate gemäß wenigstens einem der vorhergehenden Ansprüche 1 - 5 als Flokulationshilfsmittel.

## Claims

**1.** Polysaccharides containing repeat units I or a salt II thereof

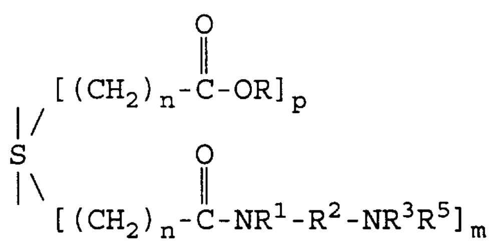

(I)

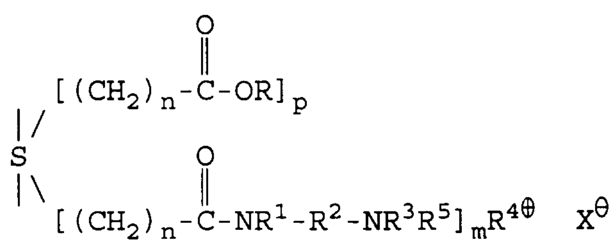

(II)

in which

| | |
|---|---|
| S | means a glucose, pentose or galactose unit or a derivativised glucose unit of cellulose, |
| p | means a number from 0 to 2.9 |

m means a number from 0.05 to 2.9

m + p means a number from 0.05 to 3.0

R means $C_{1-12}$ alkyl, $C_{5-6}$ cycloalkyl, $C_{6-12}$ aryl, $C_{7-12}$ aralkyl, $\beta$-hydroxyalkyl and/or 1/Z Me, in which Me is a cation and Z the valency of the cation,

$R^1$ means H, $C_{1-4}$ alkyl,

$R^2$ means an alkylene residue, which may be interrupted by at least one O or N atom or an olefinic double bond,

$R^3$ means H, an alkyl residue optionally substituted by an OH or olefinic group and which may be interrupted by at least one heteroatom, an aralkyl group or the residue of a polysaccharide of the formula Ia in which the indices and substituents have the above-stated meaning,

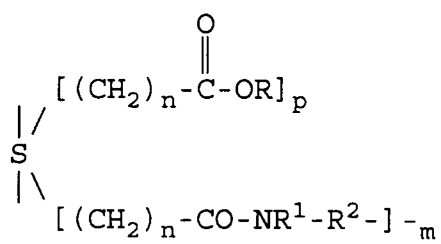

(Ia)

$R^4$ is identical or different to $R^3$, is attached to the same N atom as $R^3$ and cannot simultaneously with $R^3$ have the meaning $C_2$-$C_8$ alkylene or Ia

$R^5$ means H, an alkyl, aralkyl or aryl residue

and/or

$R^3$ and $R^5$ together with their common N atom mean a ring optionally containing another heteroatom

and/or

$R_1$ and $R^5$ together with $R^2$ mean a ring

n means an integer from 1 to 6,

$X^\ominus$ means an anion.

**2.** Polysaccharides according to claim 1, characterised in that $R^2$ represents a residue III

$-[R^6-Y-]_qR^7-$ III

in which

$R^6$ and $R^7$, which are identical or different, mean an alkylene residue with 2 to 6 C atoms optionally interrupted by an O atom,

Y means O or the group

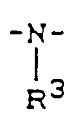,
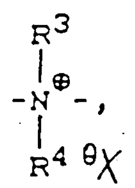,
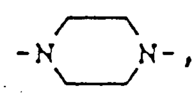,

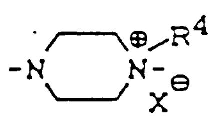
or
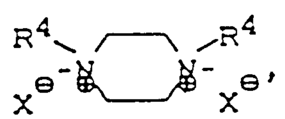,

wherein $R^3$ has the above-stated meaning and $R^4$ has the meaning of $R^3$ with the restriction that $R^4$ is not Ia,

q means an integer from 1 to 5,

$X^{\ominus}$ means an anion.

**3.** Polysaccharides according to one of the preceding claims 1 or 2, characterised in that

| | |
|---|---|
| R | means H, Na, $CH_3$, |
| $R^1$ | means hydrogen, |
| $R^2$ | means $-(CH_2-)_3-$, |
| $R^3$, $R^4$ and $R^5$ | mean $CH_3$, $CH_2CH_2OH$, H, |
| $R^3$ | moreover means Ia |
| $X^{\ominus}$ | means a chloride, $CH_3SO_4^{\oplus}$, bromide, |
| n | means 1 |
| p | means 0.1 to 1.9 |
| m | means 0.2 to 2.0 |
| S | means a glucose or pentose unit. |

**4.** Polysaccharides according to at least one of claims 1 to 3, characterised in that the monosaccharide units S are linked to a cellulose unit.

**5.** Polysaccharide according to claim 1, characterised in that they are in the form of a salt II and with the following formula unit

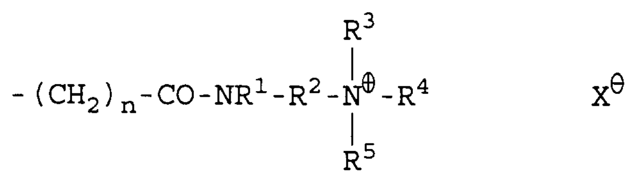

in which

n, $R^1$, $R^2$, $R^3$, $R^4$, $R^5$ and $X^{\ominus}$, p and m have the meaning stated in claim 1 and that

1) the water content in the reaction mixture is at least 4 to 120 wt.% relative to the ester of the structure IV,

2) the molar ratio of the polysaccharide ester IV to the amine V is preferably 1:0.5 to 1:10,

3) the reaction time is preferably between 3 and 20 hours,

4) the reaction temperature is preferably between 20 and 110 °C,

5) acids or alkalies are added as catalysts in quantities of 0.01 to 5 wt.% relative to the ester derivative IV.

**6.** Process for the production of polysaccharides according to one of claims 1 to 5 by reacting esters of the structure IV

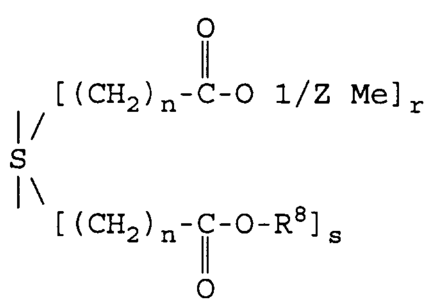

(IV)

with an amine of the structure V

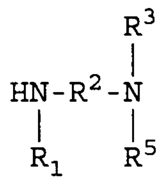

(V)

in which

- r means a number from 0 to 2.5,
- s means a number from 2.9 to 0.05,
- r+s means a number from 0.05 to 3.0
- $R^8$ means $C_{1-12}$ alkyl, $C_{5-6}$ cycloalkyl, $C_{6-12}$ aryl, $C_{7-12}$ aralkyl, β-hydroxyalkyl

and in which the remaining substituents have the meaning stated in claim 1.

**7.** Use of the polysaccharide derivatives according to at least one of the preceding claims 1 to 5 as flocculation auxiliaries.

**Revendications**

**1.** Polysaccharides contenant des motifs récurrents I ou un sel II de ces derniers

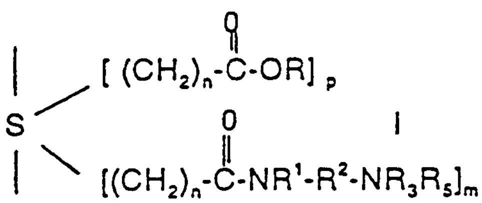

I

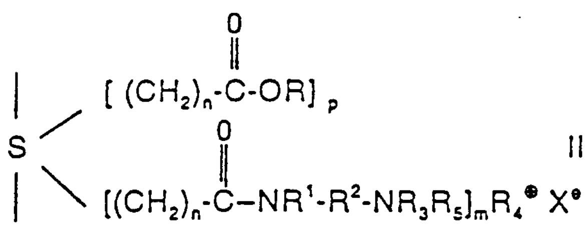

II

dans lesquels

- S représente un motif de glucose, de pentose ou de galactose ou encore un motif de glucose de la cellulose, ayant subi une dérivation
- p représente une valeur de 0 à 2,9
- m représente une valeur de 0,05 à 2,9
- m + p représente une valeur de 0,05 à 3,0
- R représente un groupe alkyle en $C_1$-$C_{12}$, un groupe cycloalkyle en $C_5$-$C_6$, un groupe aryle en $C_6$-$C_{12}$, un groupe aralkyle en $C_7$-$C_{12}$, un groupe β-hydroxyalkyle et/ou 1/Z Me, où Me représente un cation et Z représente la valeur du cation,
- $R^1$ représente H, un groupe alkyle en $C_1$-$C_4$,
- $R^2$ représente un radical alkylène qui peut être interrompu par au moins un atome O ou un atome N, ou encore par une double liaison oléfinique,
- $R^3$ représente H, un radical alkyle éventuellement substitué par un groupe OH ou par un groupement oléfinique, qui peut être interrompu par au moins un hétéroatome, un radical aralkyle ou encore le radical d'un polysaccharide répondant à la formule Ia dans laquelle les indices et les substituants ont la signification indiquée ci-dessus

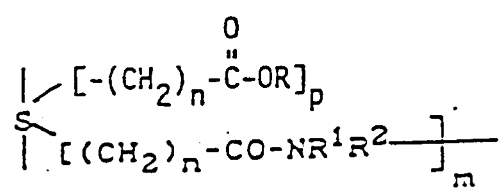

(Ia)

- $R^4$ est identique ou différent de $R^3$ et est lié avec le même atome N que celui de $R^3$, et il ne peut représenter simultanément avec $R^3$ un groupe alkylène en $C_2$-$C_8$ ou Ia,

$R^5$ représente H, un radical alkyle, un radical aralkyle ou un radical aralkyle,

et/ou

$R^3$ et $R^5$, conjointement avec l'atome N commun, représentent un noyau contenant éventuellement un hétéro-atome supplémentaire,

et/ou

$R^1$ et $R^5$, conjointement avec $R^2$ représentent un noyau,

n représente un entier de 1 à 6,

$X^\ominus$ représente un anion.

**2.** Polysaccharides selon la revendication 1, caractérisés en ce que $R^2$ représente un radical III

$-[R^6-Y-]_qR^7-$ (III)

dans laquelle

$R^6$ et $R^7$, de manière identique ou différente, représentent un radical alkylène éventuellement interrompu par un atome O, contenant de 2 à 6 atomes de carbone,

Y représente O ou le groupement

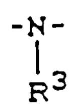, 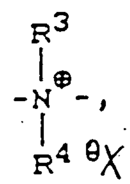, 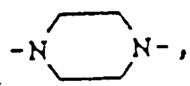,

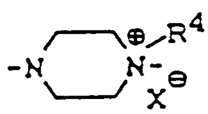 ou 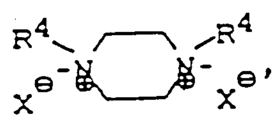,

où $R^3$ a la signification indiquée ci-dessus et $R^4$ a la signification de $R^3$, avec cette restriction que $R^4$ ne représente pas Ia,

q représente un entier de 1 à 5

$X^\ominus$ représente un anion.

**3.** Polysaccharides selon l'une quelconque des revendications précédentes 1 ou 2, caractérisés en ce que

R représente H, Na, $CH_3$,

$R^1$ représente un atome d'hydrogène,

$R^2$ représente $-(CH_2-)_3-$,

$R^3$, $R^4$ et $R^5$ représentent $CH_3$, $CH_2CH_2OH$, H,

$R^3$ représente en outre Ia,

$X^\ominus$ représente un chlorure, $CH_3SO_4^-$, un bromure,

n représente 1,

p représente de 0,1 à 1,9,

m représente de 0,2 à 2,0,

s représente un motif de glucose ou de pentose.

**4.** Polysaccharides selon au moins une des revendications 1-3, caractérisés en ce que les motifs de monosaccharides S sont liés à un motif de cellulose.

**5.** Polysaccharides selon la revendication 1, caractérisés en ce qu'ils sont présents sous la forme du sel II et contiennent le motif répondant à la formule ci-après

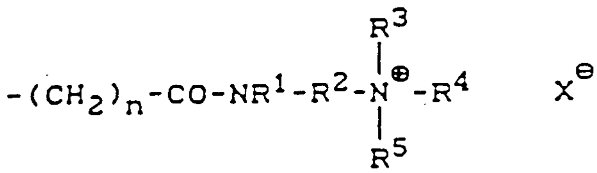

dans laquelle
n, $R^1$, $R^2$, $R^3$, $R^4$, $R^5$ et $X^{\ominus}$, p et m ont la signification indiquée dans la revendication 1, et en ce que
1) la teneur en eau dans le mélange réactionnel s'élève à au moins 4-120% en poids rapportés à l'ester de structure IV,
2) le rapport molaire de l'ester de polysaccharide IV à l'amine V s'élève de préférence de 1:0,5 à 1:10,
3) le temps réactionnel s'élève de préférence entre 3 et 20 heures,
4) la température réactionnelle s'élève de préférence entre 20 et 110 °C,
5) on ajoute des acides ou des alcalis comme catalyseurs dans des quantités de 0,01 à 5% en poids, rapportées au dérivé ester IV.

**6.** Procédé pour la préparation de polysaccharides selon l'une quelconque des revendications 1 à 5, par la mise en réaction d'esters de structure IV

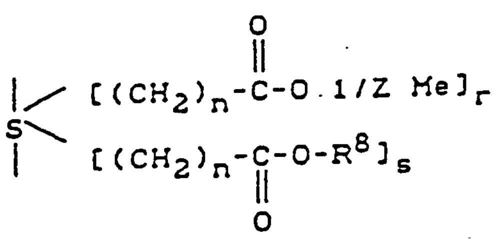

(IV)

avec une amine de structure V

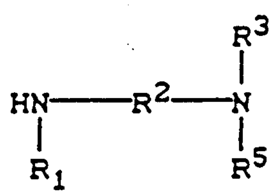

dans laquelle

| | |
|---|---|
| r | représente une valeur de 0 à 2,5, |
| s | représente une valeur de 2,9 à 0,05, |
| r + s | représente une valeur de 0,05 à 3,0, |
| $R^8$ | représente un groupe alkyle en $C_1$-$C_{12}$, un groupe cycloalkyle en $C_5$-$C_6$, un groupe aryle en $C_6$-$C_{12}$, un groupe aralkyle en $C_7$-$C_{12}$, un groupe $\beta$-hydroxyalkyle, |

et dans laquelle, les autres substituants ont la signification indiquée à la revendication 1.

**7.** Utilisation des dérivés de polysaccharides selon au moins une des revendications précédentes 1 - 5 comme adjuvant de floculation.